# EUROPÄISCHE PATENTSCHRIFT

(11) **EP 0 550 546 B1**
(45) Veröffentlichungstag und Bekanntmachung des Hinweises auf die Patenterteilung: **13.04.1994**
(21) Anmeldenummer: 91916959.9
(22) Anmeldetag: 25.09.1991
(51) Int. Cl.: G07G 1/00

(54) **KASSENLADE FÜR EINE REGISTRIERKASSE**
DRAWER FOR CASH REGISTER
TIROIR DE CAISSE ENREGISTREUSE

(30) Priorität: 26.09.1990 DE 4030456
(43) Veröffentlichungstag der Anmeldung: 14.07.1993
(73) Patentinhaber: Siemens Nixdorf Informationssysteme Aktiengesellschaft, 33102 Paderborn (DE)
(72) Erfinder: BAITZ, Günter, D-1000 Berlin 27 (DE); BURCHART, Joachim, D-4797 Schlangen (DE); KAMIN, Hartmut, D-1000 Berlin 10 (DE)
(74) Vertreter: Fuchs, Franz-Josef, Dr.-Ing.
(86) Internationale Anmeldenummer: EP9101821
(87) Internationale Veröffentlichungsnummer: WO9205525

(56) Entgegenhaltungen:
- EP-A- 0 072 370
- EP-A- 0 156 379
- EP-A- 0 234 596
- EP-A- 0 255 598

## Beschreibung

Die Erfindung bezieht sich auf eine Kassenlade für eine Registrierkasse nach dem Oberbegriff des Patentanspruches 1.

Eine solche Kassenlade ist aus der DE-GM 84 09 724 bekannt. Diese Kassenlade hat eine Geldschublade und einen damit antriebsverbundenen Deckel, der beim Ausfahren der Geldschublade aufklappt und beim Einfahren derselben zuklappt. Im Ladengehäuse der bekannten Kassenlade ist wenigstens ein Zahnsegment vorgesehen, welches jeweils mit einer an der Geldschublade angebrachten Zahnstange in Eingriff ist, wobei der Deckel fest mit dem Zahnsegment verbunden ist. Da der Deckel beim Ausfahren der Geldschublade automatisch hochklappt, ist in dieser Stellung aber auch im Falle einer aus dem Ladengehäuse entnommenen Geldschublade oder eines aus dieser entnommenen Geldeinsatzes ein Diebstahlschutz des in der Geldschublade befindlichen Geldes in der Regel nicht gegeben, so daß die Kassenendabrechnung bei aus der Geldschublade entwendetem Geld fehlerhaft sein kann. Bei unbeaufsichtigt abgelegter Geldschublade können deshalb am Ende einer Arbeitseinheit abrechnungstechnische Probleme auftreten.

Aus der DE 34 11 686 C1 ist bereits eine Kassenlade mit einer in Ein- und Ausfahrrichtung verschiebbar geführten Geldschublade und mit einem Deckel bekannt. Der Dekkel ist als unabängiger Teil ausgebildet, welcher wahlweise auf einen Transporttresor zum Transportieren eines Geldeinsatzes für die Schublade oder auf den Geldeinsatz selbst aufsetzbar und mit diesem verriegelbar ist.

Durch die EP 0 059 352 ist bereits eine Kassenlade mit einer aus- und einfahrbaren Geldschublade bekannt, die einen Schiebedeckel trägt, welcher gegenläufig zur Bewegung der Schublade verstellbar mit dieser gekoppelt ist, so daß beim Öffnen der Schublade nach vorne der Deckel nach hinten verschoben wird. Eine Sicherung des Kasseninhaltes kann dieser Deckel nicht verwirklichen.

Der Erfindung liegt die Aufgabe zugrunde, eine Kassenlade zu schaffen, bei der es weniger leicht zu kassenabrechnungstechnischen Unstimmigkeiten kommen kann.

Diese Aufgabe wird erfindungsgemäß durch eine Kassenlade mit den Merkmalen des Patentanspruchs 1 gelöst.

Günstig ist dabei, daß der Deckel durch das Einschieben der Geldschublade in das Ladengehäuse mit diesem verbunden und durch das Herstellen der Verriegelung des Deckels mit der Geldschublade von dem Ladengehäuse lösbar ist. Unter dem Begriff Geldschublade wird in der nachfolgenden Beschreibung und in den Patentansprüchen auch ein in eine Kassenlade einer Registrierkasse einsetzbarer Geldeinsatz verstanden, so daß der Deckel durch das Herstellen der Verriegelung auch zwischen Deckel und Geldeinsatz von dem Ladengehäuse lösbar und der Geldeinsatz aus der Kassenlade entnehmbar ist. Dadurch kann der Deckel beim Bedienen der Registrierkasse im Ladengehäuse verbleiben und den Betrieb der Kasse sowie die Abrechnung der zu registrierenden Waren nicht beeinträchtigen. Zusätzlich ist sichergestellt, daß die Verbindung zwischen Deckel und Ladengehäuse erst dann gelöst werden kann, wenn sich der Deckel in seiner Schließstellung, die Geldschublade also in ihrer in das Ladengehäuse eingeschobenen Stellung befindet und Dekkel sowie Geldschublade miteinander verriegelt sind. Die Geldschublade kann demnach nur mit darauf verriegeltem Deckel aus dem Ladengehäuse entnommen werden. Zum Verbinden von Deckel und Ladengehäuse ist die Geldschublade zumindest teilweise in das Ladengehäuse einzuschieben. Bei einer bevorzugten Ausführungsform befindet sich der mit dem Ladengehäuse verbundene Deckel vollständig innerhalb des Ladengehäuses. Die erfindungsgemäße Geldschublade ist also außerhalb des Ladengehäuses normalerweise verschlossen, so daß der Geldschublade Geldbeträge auch dann nicht ohne weiteres entnommen werden können, wenn sie unbeaufsichtigt abgestellt wird. Die Verriegelungseinrichtung kann im Sinne einer Doppelwirkung zum Verriegeln des Deckels mit der Geldschublade und zum Lösen der Verbindung des Deckels mit dem Ladengehäuse dienen.

Vorzugsweise ist der Deckel auf der Geldschublade verschiebbar geführt und mit Hilfe einer durch das Einschieben der Geldschublade betätigbaren Rasteinrichtung mit dem Ladengehäuse verrastbar. Eine Schiebeführung ist einfach herzustellen und unproblematisch zu bedienen. Mittels der Rasteinrichtung kann der Deckel einerseits während des Betriebs der Registrierkasse vorteilhafterweise mit dem Ladengehäuse verbunden sein, so daß die Bedienung der Geldschublade vereinfacht ist. Andererseits ist eine Entnahme oder ein Herausziehen der Geldschublade aus dem Ladengehäuse wirksam verhindert. Die Betätigung der Rasteinrichtung kann direkt durch den auf der Geldschublade befindlichen Deckel oder mittelbar durch die Geldschublade auf mechanische, elektrische, hydraulische, pneumatische oder in sonstiger Weise erfolgen und ausgelöst werden.

Vorzugsweise ist die Rasteinrichtung ein parallel zur Bewegungsrichtung des Deckels sich erstreckender, in der Deckelebene um eine am Deckel gelagerte Schwenkachse schwenkbarer Rasthebel, der mit einer Feder in seine Raststellung vorgespannt ist. Das in Einschiebrichtung des Deckels vordere Ende des Rasthebels kann eine Rastnase haben, die in der zumindest teilweise in das Ladengehäuse eingeschobenen Stellung des Deckels einen am Ladengehäuse gehaltenen Stift hintergreift. Das in Einschiebrichtung hintere Ende des Rasthebels erstreckt sich besonders günstig bis nahe zur Deckelhinterkante. Eine derartig aufgebaute Rasteinrichtung ist besonders einfach bedienbar, da der mit der Geldschublade in das Ladengehäuse eingeschobene Deckel in einer bestimmten Stellung automatisch mit dem Ladengehäuse verrastet, so daß der Deckel den Betrieb der Geldschublade insbesondere dann wenig oder gar nicht beeinträchtigt, wenn sich der Deckel vollständig in dem Ladengehäuse befindet. Da sich das hintere Ende des Rasthebels nahe der Deckelhinterkante befinden kann, besteht auch die Möglichkeit, den Rasthebel aus seiner den Stift hintergreifenden Stellung zu lösen, indem das hintere Ende des Rasthebels durch die offene Seite der Geldschublade beispielsweise von Hand verschwenkt wird.

Vorteilhafterweise ist die Verriegelungseinrichtung auf das hintere Ende des Rasthebels wirkend angeordnet und ausgebildet, so daß die Verriegelungseinrichtung zusätzlich zu ihrer Funktion, den Deckel mit der Geldschublade zu verbinden, auch dazu dienen kann, den Rasthebel der Rasteinrichtung zu verstellen und die Verbindung zwischen Deckel und Ladengehäuse zu lösen. Bei dieser Ausführungsform ist das hintere Ende des Rasthebels im Bereich der Einschieböffnung des Ladengehäuses für die Geldschublade angeordnet und deshalb einer Betätigung besonders leicht zugänglich.

Bei einer Weiterbildung der Kassenlade ist die Verriegelungseinrichtung ein mit einem Schloß versehener Schloßriegel, der zwischen einer eine Bewegung des Dekkels blockierenden Verriegelungs- und einer eine solche Bewegung freigebenden Entriegelungsstellung bewegbar ist. Die Geldschublade ist bei dieser Ausführungsform aus dem Ladengehäuse nur mit Hilfe eines zu dem Schloß des Schloßriegels passenden Schlüssels entnehmbar, so daß unbefugte Personen die Verbindung zwischen Deckel und Ladengehäuse nicht lösen können.

Vorzugsweise hat der Deckel eine Sperre, die ein vollständiges Herausziehen der Geldschublade bei mit dem Ladengehäuse verbundenem Deckel verhindert. Dadurch ist eine Entnahme oder ein Herausziehen der Geldschublade aus dem Ladengehäuse wirksam verhindert. Erst wenn die Sperre von einer dazu berechtigten Person gelöst wird, kann die Geldschublade vollständig aus dem Ladengehäuse herausgezogen werden. Die Sperre ist somit eine zusätzliche Sicherung dafür, daß der Deckel in allen Betriebsstellungen mit der Geldschublade verbunden ist und beispielsweise nach dem Ende einer Arbeitseinheit nicht in dem Ladengehäuse vergessen wird. Außerdem ist sichergestellt, daß die außerhalb des Ladengehäuses befindliche Geldschublade in allen Fällen mit dem Deckel verschließbar ist.

Günstig ist ferner, die Deckelhinterkante zumindest teilweise als zur Geldschublade hin umgebogene Sperre auszubilden, deren Breite größer ist als der Abstand zwischen dem Decke und der Oberkante der Geldschublade. Eine solche Sperre ist leicht zu konstruieren und mit geringem Aufwand an dem Deckel vorzusehen. Wenn die Geldschublade bei mit dem Ladengehäuse verrastetem Dekkel aus dem Ladengehäuse herausgezogen wird, dient die an der Deckelhinterkante vorgesehene Sperre als ein gegen die Vorderwand der Geldschublade greifender Anschlag, so daß die Geldschublade nicht vollständig aus dem Ladengehäuse herausgezogen werden kann. Ein Entwenden der Geldschublade ist somit ohne ein Betätigen der Rasteinrichtung des Deckels weitgehend ausgeschlossen.

Vorteilhafterweise ist die Geldschublade in ihrer in das Ladengehäuse eingeschobenen Stellung mit dem Ladengehäuse verriegelbar, wobei diese Verriegelung mittels der Verriegelungseinrichtung lösbar ist. Damit ist es möglich, die in der Registrierkasse befindliche Geldschublade abzuschließen und gegen unbefugten Zugriff zu sichern. Das Kassierpersonal hat also nach beendeter Arbeitseinheit die Wahl, die Geldschublade entweder in der Registrierkasse zu verriegeln oder die Geldschublade aus dem Ladengehäuse zu entnehmen und an einem anderen Ort sicher aufzubewahren. Damit kann die Verriegelungseinrichtung im Sinne einer weiteren Wirkung nicht nur zum Verriegeln des Deckels mit der Geldschublade oder zum Lösen der Verbindung zwischen dem Deckel und dem Ladengehäuse, sondern zusätzlich zu der an sich bekannten elektromechanischen Entriegelung auch zum Entriegeln der Geldschublade aus ihrer in das Ladengehäuse eingeschobenen Stellung dienen. Durch die dreifache Wirkung der Verriegelungseinrichtung ist der Aufbau der Kassenlade weiter vereinfacht.

Bei einer anderen Weiterbildung der Kassenlade hat der Deckel nahe seinem in Einschiebrichtung vorderen Ende ein Aufnahmefach für wenigstens eine Karte mit integrierten Schaltkreisen, insbesondere einer solchen nach dem ISO-Standard 7816, wobei das Aufnahmefach vorzugsweise eine schwenkbar an der Oberseite des Deckels gelagerte Abdeckung hat, die mit dem Deckel verschließbar ist. Diese Ausführungsform hat den Vorteil, daß auf der Karte die Daten beispielsweise des betreffenden Kassierpersonals oder die Tagesumsätze eingespeichert sein können. Außerdem kann die Karte den Geldbetrag der betreffenden Geldschublade enthalten. Dadurch ergeben sich beispielsweise bei der Aufsummierung der Tagesumsätze des gesamten Kassierpersonals beträchtliche Zeiteinsparungen. Ein solches verschließbares Aufnahmefach ermöglicht ferner den Einsatz der Karte als Firmenkarte, mit der sich das Kassierpersonal automatisch bei dem Rechner der Registrierkasse oder einer übergeordneten Datenverarbeitungsanlage anmelden bzw. abmelden kann. Dadurch können komplizierte Eingabevorgänge beim Kassiererwechsel entfallen. Die Karte kann auch als Firmenkarte zum Einschalten der Betriebsfunktionen der Registrierkasse verwendet werden.

Ausführungsbeispiele des Erfindungsgegenstandes werden nachfolgend anhand der Zeichnung näher erläutert. Es zeigen:
- Fig. 1: eine schematische, auseinandergezogene, perspektivische Ansicht einer Kassenlade für eine Registrierkasse;
- Fig. 2: eine teilweise geschnittene Seitenansicht der Kassenlade gemäß Fig. 1 in ihrer in ein Ladengehäuse eingeschobenen Stellung; und
- Fig. 3: eine schematische perspektivische Ansicht eines Deckels für die Kassenlade mit einem Aufnahmefach für einen kartenförmigen Schaltungsträger, insbesondere eine Speicherkarte.

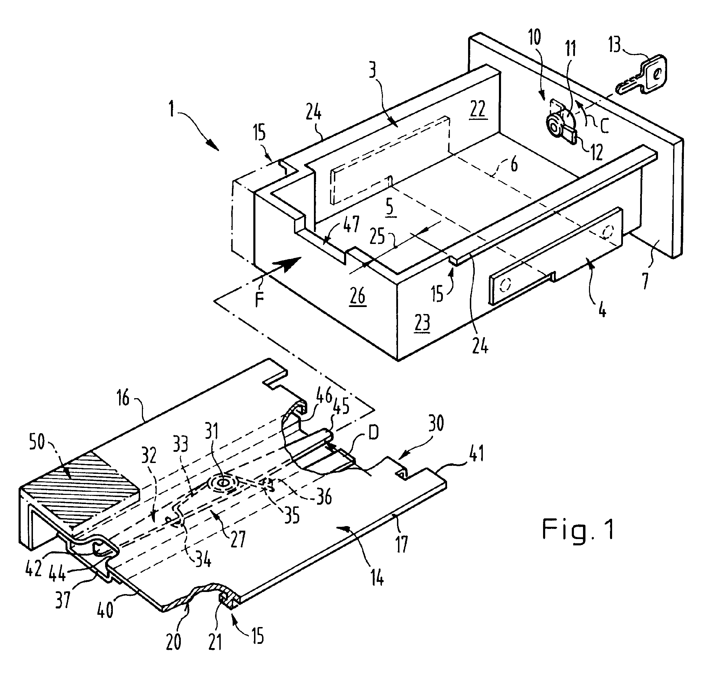

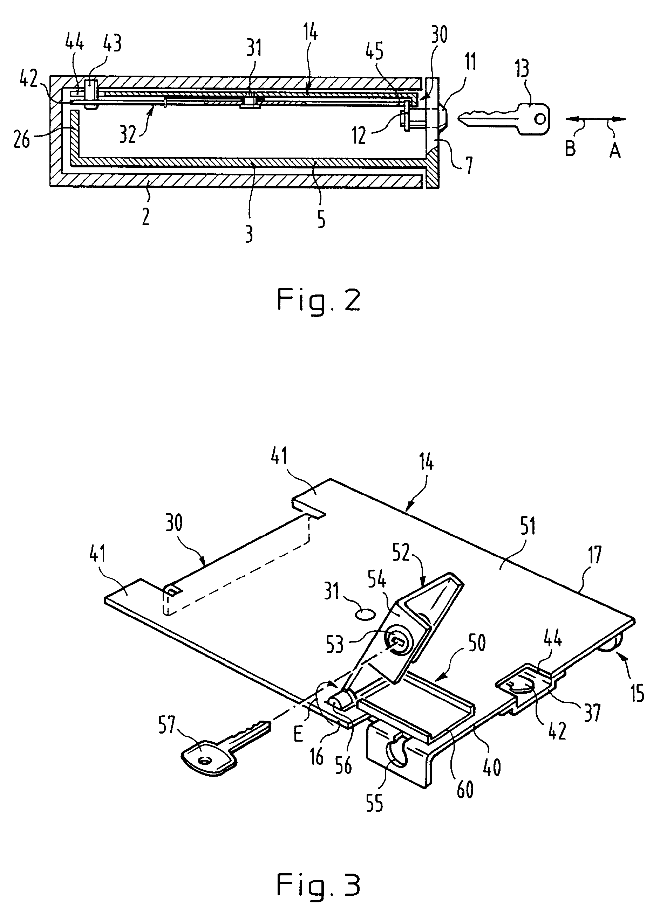

In Fig. 1 ist eine Kassenlade 1 für eine nicht näher gezeigte Registrierkasse in einer auseinandergezogenen Darstellung schematisch gezeigt. Die Kassenlade 1 besteht im wesentlichen aus einer in einem Ladengehäuse 2 in Aus- und Einfahrrichtung (siehe Pfeile A, B in Fig. 2) verschiebbar geführten Geldschublade 3, die derart angeordnet und ausgebildet ist, daß sie vor dem Bedienen der Registrierkasse, d.h. vor jeder Arbeitseinheit, in das Ladengehäuse 2 einschiebbar und nach beendetem Bedienen der Registrierkasse, d.h. nach jeder Arbeitseinheit, aus dem Ladengehäuse 2 entnehmbar ist.

Wie in Fig. 1 angedeutet, ist die Geldschublade 3 auf einer Halterung 4 abgestützt, die die Geldschublade teilweise umgreift. Gemäß Fig. 1 ist die Halterung ein U-förmiges Profil, in das die Geldschublade 3 eingesetzt oder eingeschoben ist. Die Halterung 4 ist auf nicht näher gezeigte Weise mit Führungsschienen verbunden, die in dem Ladengehäuse 2 befestigt sind und eine Verschiebebewegung der Halterung sowie der mit dieser verbundenen Geldschublade in Aus- und Einfahrrichtung (siehe Pfeile A und B in Fig. 2) ermöglichen. Um während des Bedienens der Registrierkasse eine Relativbewegung zwischen der Geldschublade 3 und der Halterung 4 zu verhindern, hat die Bodenwand 5 in ihrer in Fig. 1 nach unten weisenden Außenseite eine Ausnehmung 6, deren Breite die Breite der Halterung 4 in diesem Bereich geringfügig übersteigt. Dadurch ist sichergestellt, daß die Geldschublade 3 in ihrer auf der Halterung 4 abgestützten Stellung nicht relativ zur Halterung 4 verschoben werden kann. Das Einsetzen der Geldschublade 3 in die Halterung 4 ist besonders einfach in Fig. 1 von oben möglich. Geldschublade 3 und Halterung 4 können aber auch lösbar auf andere Weise, beispielsweise über Rastmittel, miteinander verbunden sein.

Es ist auch denkbar, daß die Geldschublade 3 fest mit der Halterung 4 verbunden ist und daß der eigentliche Behälter für die Geldaufnahme lose in die Geldschublade eingesetzt ist. Ein solcher Behälter ist allgemein als Geldeinsatz bekannt und deshalb nicht dargestellt.

Gemäß den Fig. 1 und 2 hat die Geldschublade 3 einen Decke 14, der zwischen einer die Geldschublade 3 verschließenden Schließstellung (siehe Fig. 2) und einer die Geldschublade freigebenden Freigabestellung (vgl. auch Fig. 1) bewegbar und in seiner Schließstellung mit der Geldschublade 3 lösbar verriegelt ist. Dazu ist der Deckel 14 auf der Geldschublade 3 mittels einer Schiebeführung 15 verschiebbar geführt und mittels einer Verriegelungseinrichtung 10 mit der Geldschublade 3 verriegelbar (vgl. Fig. 2). Die Schiebeführung 15 besteht aus einem nahe jeder Seitenkante 16, 17 des Dekkels 14 an dessen Unterseite 20 angebrachten L-förmigen Profil 21, das einen an dem oberen Ende jeder Seitenwand 22, 23 der Geldschublade 3 ausgebildeten Steg 24 umgreift. Die Stege 24 beginnen nahe der hinteren Wand 7 und enden um ein Maß 25 vor der in Einfahrrichtung B vorderen Wand 26 der Geldschublade 3. Bei Verwendung eines Geldeinsatzes sind die Stege 24 und die weiter unten beschriebenen Elemente 10, 11, 12 nicht an der Geldschublade 3 sondern an dem Geldeinsatz angebracht. Im folgenden wird auf das Ausführungsbeispiel mit Geldeinsatz nicht mehr eingegangen. Durch das Einschieben der Geldschublade 3 in das Ladengehäuse 2 ist der eckel 14 mit dem Ladengehäuse 2 verbunden und durch das Herstellen der Verriegelung von diesem lösbar, wie nachstehend noch genauer beschrieben wird.

Der Deckel 14 ist mit Hilfe einer Rasteinrichtung 27 bei vollständig in das Ladengehäuse 2 eingeschobener Geldschublade 3 (vgl. Fig. 2) mit dem Ladengehäuse 2 verrastbar und hat eine Sperre 30, die ein vollständiges Herausziehen der Geldschublade 3 bei mit dem Ladengehäuse 2 verbundenem Deckel 14 verhindert. Gemäß den Fig. 1 und 2 ist die Rasteinrichtung 27 ein parallel zur Bewegungsrichtung (siehe Pfeile A und B in Fig. 2) des Deckels 14 sich erstreckender, in der Deckelebene um eine am Deckel gelagerte Schwenkachse 31 schwenkbarer Rasthebel 32, der mit einer Feder 33 in seine in Fig. 1 gezeigte Raststellung, d. h. im Uhrzeigersinn, vorgespannt ist. Der Rasthebel 32 ist etwa in seiner Längsmitte über die Schwenkachse 31 mit dem Deckel 14 verbunden. Gemäß Fig. 1 ist die Feder 33 eine Drehfeder, die im Bereich der Schwenkachse 31 angeordnet ist und deren eines Ende 34 an dem Rasthebel 32 angreift und deren anderes Ende 35 sich mittels eines Zapfens 36 am Deckel 14 abstützt. Die Feder kann aber auch eine an einem Ende des Rasthebels 32 sich abstützende Zug- oder Druckfeder sein.

Der Rasthebel 32 ist länglich ausgebildet und erstreckt sich an der Unterseite 20 des Deckels 14 nahezu über dessen gesamte Länge. Der Rasthebel ist von einer kanalförmigen Abdeckung 37 umgeben, die an der Unterseite 20 des Deckels 14 befestigt ist und sich vom vorderen Ende 40 des Deckels bis nahe zur Deckelhinterkante 41 erstreckt. Das in Einschiebrichtung des Deckels 14 vordere Ende 40 des Rasthebels 32 hat eine Rastnase 42, die in der in das Ladengehäuse 2 eingeschobenen Stellung des Deckels 14 (vgl. Fig. 2) einen am Ladengehäuse 2 gehaltenen Stift 43 hintergreift. Im Bereich der Rastnase 42 des Rasthebels 32 hat der Deckel 14 eine Ausnehmung 44, in der sich bei vollständig in das Ladengehäuse 2 eingeschobenem Deckel der Stift 43 befindet.

Die Verriegelungseinrichtung 10 ist an der in Einfahrrichtung (siehe Pfeil B in Fig. 2) hinteren Wand 7 der Geldschublade 3 angebracht. Gemäß den Fig. 1 und 2 ist die Verriegelungseinrichtung 10 ein mit einem Schloß 11 versehener Schloßriegel 12, der zwischen einer eine Bewegung des Deckels 14 blockierenden Verriegelungs- und einer eine solche Bewegung freigebenden Entriegelungsstellung bewegbar ist. Bei der zuvor beschriebenen Ausführungsform kann der Schloßriegel 12 der Verriegelungseinrichtung 10 bei einer Drehung des Schlosses 11 mit Hilfe eines Schlüssels 13 um etwa 90° (siehe Pfeil C in Fig. 1) in eine nicht näher gezeigte Ausnehmung im hinteren Bereich des Deckels 14 eingreifen (gestrichelte Darstellung des in Fig. 1 nach oben verschwenkten Schloßriegels 12) oder die Sperre 30 hintergreifen.

Das in Einschiebrichtung hintere Ende 45 des Rasthebels 32 erstreckt sich bis nahe zur Deckelhinterkante 41. Die Verriegelungseinrichtung 10 ist auf das hintere Ende 45 des Rasthebels 32 wirkend angeordnet und ausgebildet, so daß der Schloßriegel 12 in seiner gemäß Pfeil C nach oben verschwenkten Verriegelungsstellung (in Fig. 1 gestrichelt dargestellt) das hintere Ende 45 des Rasthebels 32 beaufschlagen kann (siehe Pfeil D in Fig. 1). Dazu überragt das hintere Ende 45 des Rasthebels 32 das hintere Ende 46 der kanalförmigen Abdeckung 37 um ein geringes Maß. Dieses Maß entspricht wenigstens der Dicke des Schloßriegels 12.

Gemäß den Fig. 1 bis 3 ist die Deckelhinterkante 41 teilweise als zur Geldschublade 3 hin umgebogene Sperre 30 ausgebildet, deren Breite größer ist als der Abstand zwischen dem Deckel 14 und der Oberkante der Geldschublade 3. Gemäß den Fig. 1 und 3 ist die Deckelhinterkante 41 im Bereich der Schiebeführung 15 nicht zur Geldschublade hin umgebogen, sondern dient bei auf der Geldschublade 3 geführtem Deckel 14 als Anschlag gegen die hintere Wand 7 der Geldschublade 3. An ihrem in Fig. 1 oberen Ende hat die vordere Wand 26 der Geldschublade 3 einen Rücksprung 47, dessen Länge und Tiefe wenigstens den entsprechenden Größen der kanalförmigen Abdeckung 37 entsprechen.

Bei einem anderen Ausführungsbeispiel (nicht genauer dargestellt) ist die Geldschublade 3 in ihrer in das Ladengehäuse 2 eingeschobenen Stellung mittels der Verriegelungseinrichtung 10 mit dem Ladengehäuse 2 verriegelbar. Der Schloßriegel 12 der Verriegelungseinrichtung 10 kann beispielsweise in eine nicht gezeigte Ausnehmung in der Unterseite der oberen Wand des Ladengehäuses 2 eingreifen.

Gemäß den Fig. 1 und 3 hat der Deckel 14 nahe seinem vorderen Ende 40 ein Aufnahmefach 50 für kartenförmige Schaltungsträger, insbesondere Karten (nicht näher gezeigt) mit integrierten Schaltkreisen, vornehmlich nach dem ISO-Standard 7816, wobei das Aufnahmefach 50 eine schwenkbar an der Oberseite 51 des Deckels 14 gelagerte Abdeckung 52 hat, die mit dem Deckel 14 mittels eines Schlosses 53 verschließbar ist (siehe Fig. 3). Die Abdeckung 52 ist L-förmig ausgebildet, wobei sich ein Schenkel 54 dieses L-Profils in vertikaler Richtung erstreckt und das Schloß 53 aufnimmt. Im Bereich des vorderen Endes 40 des Deckels 14 ist die Seitenkante 16 winklig, in Fig. 3 nach unten hin abgebogen und hat eine Öffnung 55 für den nicht näher gezeigten Schloßriegel des Schlosses 53. Die Abdeckung 52 kann zum Halten einer nicht gezeigten Karte in dem Aufnahmefach 50 in Richtung des Pfeils E um ihre Schwenkachse 56 verschwenkt und bei parallel zur Oberseite 51 angeordneter Abdeckung 52 mittels eines Schlüssels 57 und des Schlosses 53 versperrt werden.

Das Aufnahmefach 50 hat bei geschlossener Abdeckung 52 an seinem dem vorderen Ende 40 des Deckels 14 nahen Ende 60 einen nicht näher dargestellten Schlitz, dessen Breite geringer ist als die Dicke der in dem Aufnahmefach angeordneten Karte, aber so groß ist, daß Kontaktelemente oder Signalübermittlungselemente einer nicht näher gezeigten, in dem Ladengehäuse 2 angeordneten Stiftleiste durch den Schlitz des Aufnahmefaches 50 in eine am vorderen Ende der Karte ausgebildete Kontaktaufnahme der Karte eingreifen können. Beim Einschieben des auf der Geldschublade 3 geführten Deckels 14 in das Ladengehäuse 2 kontaktieren die Kontaktelemente automatisch mit der jeweiligen Kontaktaufnahme der Karte. Die Karten können als sogenannte Memory-Karten ausgebildet sein und beispielsweise die Daten des Kassierpersonals und die an der betreffenden Registrierkasse erzielten Tagesumsätze enthalten. Außerdem können der Wechselgeldinhalt der Geldschublade 3 und die Arbeitszeit des Kassierpersonals auf der Karte abgespeichert sein. Die Karte kann aber auch eine einfache Speicherkarte zum Abspeichern von Informationen sein. Vorzugsweise ist die Karte aber eine Chip-Karte (Karte mit integrierten Schaltkreisen), wobei diese mit der Steuerung der Registrierkasse zusammenwirken und besipielsweise die Betriebsfunktionen der Kasse einschalten usw..

Nachfolgend wird der Betrieb der Kassenlade für eine Registrierkasse näher beschrieben.

Ein nicht näher gezeigter kartenförmiger Schaltungsträger, z.B. eine Karte mit integrierten Schaltkreisen, wird in das auf der Oberseite 51 des Deckels 14 befindliche Aufnahmefach 50 so eingelegt, daß die Kontaktaufnahme der Karte zum Ende 60 des Aufnahmefaches weist. Die Abdeckung 52 des Aufnahmefachs 50 wird in Richtung des Pfeils E (siehe Fig. 3) verschwenkt, bis der nicht gezeigte Schloßriegel des Schlosses 53 in die Öffnung 55 eingreift und mit Hilfe des Schlüssels 57 so verdreht werden kann, daß das Aufnahmefach abgesperrt und die darin befindliche Karte gegen Entnahme gesichert ist.

Der Deckel 14 wird nun derart auf die Geldschublade 3 aufgesetzt, daß sich die Deckelhinterkante 41 etwa im Bereich des Maßes 25, also zwischen dem vorderen Ende der Schiebeführung 15 und der vorderen Wand 26 der Geldschublade 3 befindet. In dieser Stellung umgreift das L-förmige Profil 21 noch nicht die Stege 24 der Schiebeführung 15. Das hintere Ende 46 der kanalförmigen Abdeckung 37 befindet sich aber bereits etwa im Bereich des in der vorderen Wand 26 der Geldschublade 3 ausgebildeten Rücksprungs 47. In dieser Stellung des Deckels 14 kann auch das Wechselgeld in die Geldschublade eingelegt werden. Anschließend wird der Deckel in Richtung des Pfeiles F (siehe Fig. 1) soweit verschoben, bis die nicht umgebogene Deckelhinterkante 41 an der hinteren Wand 7 der Geldschublade anschlägt.

Falls gewünscht, kann der Schloßriegel 12 aus seiner in Fig. 1 gezeigten Stellung mit Hilfe des Schlüssels 13 in Richtung des Pfeils C soweit verschwenkt werden, bis das freie Ende des Schloßriegels 12 die als Sperre 30 ausgebildete Deckelhinterkante hintergreift. Das Schloß 11 kann so ausgebildet sein, daß der Schlüssel 13 auch in dieser den Rasthebel 32 vorzugsweise nicht beaufschlagenden Stellung von der Geldschublade 3 abgezogen werden kann. In dieser Stellung befindet sich der Dekkel in seiner Sperrstellung und ist mit der Geldschublade 3 verriegelt.

Eine derartige Kassenlade kann einer Person des Kassierpersonals ausgehändigt werden, die diese vorzugsweise von oben auf die Halterung 4 einer nicht gezeigten Registrierkasse derart aufsetzt, daß die Halterung in der in der Bodenwand 5 vorgesehenen Ausnehmung 6 zu liegen kommt. Nunmehr wird die Geldschublade 3 mit ihrem Deckel 14 einschließlich der Halterung 4 in das Ladengehäuse 2 eingeschoben (vgl. Einfahrrichtung gemäß Pfeil B in Fig. 2), bis der Rasthebel 32 eine Schwenkbewegung zunächst im Gegenuhrzeigersinn, nachfolgend im Uhrzeigersinn um seine Schwenkachse 31 ausführt und den in dem Ladengehäuse 2 gehaltenen Stift 43 hintergreift. Gemäß Fig. 2 ist die Geldschublade in dieser Stellung vollständig in das Ladengehäuse 2 eingeschoben. Es ist aber auch möglich, daß die Geldschublade bei der Verrastung des Deckels 14 mit dem Ladengehäuse 2 nur teilweise in diese eingeschoben ist. Ferner ist denkbar, den Geldeinsatz anstatt mit dem Ladengehäuse mit der fest an der Registrierkasse montierten Geldschublade zu verrasten.

Durch eine Drehung des Schlüssels 13 entgegen dem Pfeil C (siehe Fig. 1) wird der Schloßriegel 12 in seine in Fig. 1 gezeigte durchgezogene Stellung überführt und die Geldschublade 3 für eine Verschiebebewegung in Ausund Einfahrrichtung (siehe Pfeile A,B in Fig. 2) freigegeben. Beim Verrasten des Deckels mit dem Ladengehäuse greifen auch die Kontaktelemente einer nicht gezeigten Stiftleiste in eine oder mehrere den Kontaktelementen entsprechende Kontaktaufnahmen der betreffenden Karte ein, so daß die Registrierkasse für die betreffende Person betriebsbereit ist. Anschließend erfolgt die Bedienung der Registrierkasse wie in herkömmlicher Weise. Die als Sperre 30 ausgebildete, in Richtung der Geldschublade 30 umgebogene Deckelhinterkante 41 verhindert aber ein vollständiges Herausziehen der Geldschublade aus dem Ladengehäuse ohne den Deckel 14.

Nach beendetem Bedienen der Registrierkasse für das betreffende Personal, d.h. also auch bei einem Wechsel der Kassierperson, schiebt diese die Geldschublade vollständig in das Ladengehäuse ein und verschwenkt den Schloßriegel 12 mit Hilfe des Schlüssels 13 in Richtung des Pfeils C bis in seine in Fig. 1 gezeigte gestrichelte Stellung, in welcher der Schloßriegel das hintere Ende 45 des Rasthebels 32 in Richtung des Pfeils D entgegen der Kraft der Feder 33 beaufschlagt, so daß sich der Rasthebel 32 im Gegenuhrzeigersinn um die Schwenkachse 31 bewegt und die Rastnase 42 den Stift 43 freigibt. Die Geldschublade 3 kann nun mitsamt ihrem Deckel 14 und der Halterung 4 aus dem Ladengehäuse 2 der Registrierkasse herausgezogen werden. Vorzugsweise wird der Schlüssel 13 vorher von der hinteren Wand 7 der Geldschublade abgezogen, wobei es möglich ist, daß der Schloßriegel aufgrund der Kraft der Feder 33 um ein geringes Maß entgegen der Richtung des Pfeils C verschwenkt und der Schlüssel erst in dieser Stellung des Schloßriegels 12 abgezogen werden kann. Es ist aber auch möglich, daß der Schlüssel 13 in der gestrichelten Stellung des Schloßriegels 12 abgezogen werden kann; der Rasthebel 32 kann in diesem Fall gegen den Schloßriegel vorgespannt sein.

Bei vollständig aus dem Ladengehäuse 2 herausgezogener Halterung 4 wird die Geldschublade mit ihrem in der Sperrstellung befindlichen Deckel aus der Halterung 4 gehoben und an einem sicheren Ort aufbewahrt. Gleichzeitig mit dem Herausziehen der Geldschublade mit dem dazugehörigen Deckel geraten auch die Kontaktelemente mit der Karte außer Eingriff, so daß sich die betreffende Kassierperson automatisch von der Registrierkasse abmeldet. Eine derartig ausgebildete Kassenlade ist einfach aufgebaut und trägt mit dazu bei, abrechnungstechnische Unstimmigkeiten zu vermeiden.

Die zuvor beschriebene Kassenlade kann besonders vorteilhaft eingesetzt werden, wenn sie einer bestimmten Person des Kassierpersonals zugeordnet wird. Jeder Person des Kassierpersonals ist dann eine eigene Geldschublade zugeordnet, die ausschließlich von dieser Person bedient wird. Bei einem Wechsel des Kassierpersonals entnimmt die eine Person ihre Geldschublade aus dem Ladengehäuse, während die andere Person ihre eigene Geldschublade in das Ladengehäuse einsetzt. Bei der Kassenabrechnung bemerkte Fehler in einzelnen Geldschubladen können somit unproblematisch der betreffenden Person zugeordnet werden, so daß es insbesondere dann weniger leicht zu abrechnungstechnischen Unstimmigkeiten des Personals kommen kann, wenn während einer Arbeitseinheit mehrere Personen die Registrierkasse bedient haben. Bei häufigem Wechsel des Kassierpersonals, sogenanntes Springen, auftretende abrechnungstechnische Fehler, z.B. bei der Herausgabe des Wechselgeldes aus der Geldschublade einer Registrierkasse, können damit nicht mehr zu Unstimmigkeiten zwischen den einzelnen Personen des Kassierpersonals führen.

## Patentansprüche

1. Kassenlade (1) für eine Registrierkasse, mit einer in einem Ladengehäuse (2) in Aus- und Einfahrrichtung verschiebbar geführten Geldschublade (3) und mit einem Deckel (14), der mit der Geldschublade (3) in seiner Schließstellung mittels einer Verriegelungseinrichtung (10) lösbar verriegelt ist,
**dadurch gekennzeichnet**,
daß der Deckel (14) durch das Einschieben der Geldschublade (3) in das Ladengehäuse (2) mit diesem verbunden und durch das Herstellen der Verriegelung des Deckels (14) mit der Geldschublade (3) von dem Ladengehäuse (2) lösbar ist.

2. Kassenlade nach Anspruch 1, dadurch **gekennzeich****net**, daß der Deckel (14) auf der Geldschublade (3) verschiebbar geführt und mit Hilfe einer durch das Einschieben der Geldschublade (3) betätigbaren Rasteinrichtung (27) mit dem Ladengehäuse (2) verrastbar ist.

3. Kassenlade nach Anspruch 2, dadurch **gekennzeich****net**, daß die Rasteinrichtung (27) ein parallel zur Bewegungsrichtung des Deckels (14) sich erstrekkender, in der Deckelebene um eine am Deckel (14) gelagerte Schwenkachse (31) schwenkbarer Rasthebel (32) ist, der mit einer Feder (33) in seine Raststellung vorgespannt ist.

4. Kassenlade nach Anspruch 3, dadurch **gekennzeich****net**, daß das in Einschiebrichtung des Deckels (14) vordere Ende des Rasthebels (32) eine Rastnase (42) hat, die in der zumindest teilweise in das Ladengehäuse (2) eingeschobenen Stellung des Deckels (14) einen am Ladengehäuse (2) gehaltenen Stift (43) hintergreift, und daß sich das in Einschiebrichtung hintere Ende (45) des Rasthebels (32) bis nahe zur Deckelhinterkante (41) erstreckt.

5. Kassenlade nach Anspruch 4, dadurch **gekennzeich****net**, daß die Verriegelungseinrichtung (10) auf das hintere Ende (45) des Rasthebels (32) wirkend angeordnet und ausgebildet ist.

6. Kassenlade nach einem der Ansprüche 1 bis 5, dadurch **gekennzeichnet,** daß die Verriegelungseinrichtung (10) ein mit einem Schloß (11) versehener Schloßriegel (12) ist, der zwischen einer eine Bewegung des Deckels (14) blockierenden Verriegelungs- und einer eine solche Bewegung freigebenden - Entriegelungsstellung bewegbar ist.

7. Kassenlade nach einem der Ansprüche 1 bis 6, dadurch**gekennzeichnet,** daß der Deckel (14) eine Sperre (30) hat, die ein vollständiges Herausziehen der Geldschublade (3) bei mit dem Ladengehäuse (2) verbundenem Deckel (14) verhindert.

8. Kassenlade nach einem der Ansprüche 1 bis 7, dadurch **gekennzeichnet,** daß die Deckelhinterkante (41) zumindest teilweise als zur Geldschublade (3) hin umgebogene Sperre (30) ausgebildet ist, deren Breite größer ist als der Abstand zwischen dem Dekkel (14) und der Oberkante der Geldschublade (3).

9. Kassenlade nach einem der Ansprüche 1 bis 8, dadurch **gekennzeichnet**, daß die Geldschublade (3) mit Deckel (14) in ihrer in das Ladengehäuse (2) eingeschobenen Stellung mit dem Ladengehäuse (2) Verriegelbar ist und daß diese Verriegelung mittels der Verriegelungseinrichtung (10) aufhebbar ist.

10. Kassenlade nach einem der Ansprüche 1 bis 9, dadurch **gekennzeichnet,** daß der Deckel (14) nahe seinem in Einschiebrichtung vorderen Ende (40) ein Aufnahmefach (50) für wenigstens eine Chip-Karte mit integrierten Schaltkreisen, insbesondere einer solchen nach dem ISO-Standard 7816, hat, die mit am Deckel (14) einerseits und am Gehäuse (2) andererseits angeordneten Kontaktelementen mit einer Funktionssteuerung der Registrierkasse verbindbar ist.

11. Kassenlade nach Anspruch 10, dadurch **gekennzeichnet**, daß das Aufnahmefach (50) eine schwenkbar an der Oberseite (51) des Deckels (14) gelagerte Abdeckung (52) hat, die mit dem Deckel (14) verschließbar ist.

## Claims

1. Till drawer (1) for a cash register, having a money drawer (3), which is displaceably guided in a drawer housing (2) in the push-in and draw-out direction, and having a lid (14), which is detachably locked to the money drawer (3) in its closing position by means of a locking device (10), characterized in that the lid (14) is connected to the drawer housing (2) through the money drawer (3) being slid in and is detachable from the drawer housing (2) through the creation of the locking of the lid (14) to the money drawer (3).

2. Till drawer according to Claim 1, characterized in that the lid (14) is displaceably guided on the money drawer (3) and can be latch-locked to the drawer housing (2) by means of a latch device (27) which can be actuated by the sliding-in of the money drawer (3).

3. Till drawer according to Claim 2, characterized in that the latch device (27) is a latch lever (32), extending parallel to the direction of motion of the lid (14) and pivotable in the plane of the lid about a swivel axle (31) mounted on the lid (14), which latch lever is pre-tensioned by a spring (33) into its latch-locking position.

4. Till drawer according to Claim 3, characterized in that the front end of the latch lever (32), in the slide-in direction of the lid (14), has a latch boss (42), which, in the position of the lid (14) slid at least partially into the drawer housing (2), back-grips a pin (43) secured on the drawer housing (2), and in that the rear end (45) of the latch lever (32), in the slide-in direction, extends nearly up to the lid rear edge (41).

5. Till drawer according to Claim 4, characterized in that the locking device (10) is disposed and configured so as to act upon the rear end (45) of the latch lever (32).

6. Till drawer according to Claims 1 to 5, characterized in that the locking device (10) is a lock bolt (12) provided with a lock (11), which lock bolt is movable between a locking position blocking any movement of the lid (14) and an unlocking position freeing such a movement.

7. Till drawer according to one of Claims 1 to 6, characterized in that the lid (14) has a pawl (30) which prevents the money drawer (3) from being pulled fully out whenever the lid (14) is connected to the drawer housing (2).

8. Till drawer according to one of Claims 1 to 7, characterized in that the lid rear edge (41) is configured at least partially as a pawl (30) which is bent over in the direction of the money drawer (3), the width of the said pawl being greater than the distance between the lid (14) and the top edge of the money drawer (3).

9. Till drawer according to one of Claims 1 to 8, characterized in that the money drawer (3) with the lid (14), in its position slid into the drawer housing (2), can be locked to the drawer housing (2), this locking attachment (10) being able to be cancelled by means of the locking device (10).

10. Till drawer according to one of Claims 1 to 9, characterized in that the lid (14) has, close to its front end (40) in the slide-in direction, a receiving tray (50) for at least one integrated circuit chip card, preferably one conforming to ISO Standard 7816, which chip card can be connected by contact elements disposed, on the one hand, on the lid (14) and, on the other hand, on the housing (2), to a function control system of the cash register.

11. Till drawer according to Claim 10, characterized in that the receiving tray (50) has a cover (52), which is pivotably mounted on the top side (51) of the lid (14) and can be closed by the lid (14).

## Revendications

1. Tiroir-caisse (1) pour une caisse enregistreuse, comportant un tiroir (3) pour l'argent, qui est guidé de manière à être déplacé dans les directions de sortie et d'introduction, et un couvercle (14), qui est verrouillé de façon amovible sur le tiroir (3) contenant l'argent, dans sa position fermée, au moyen d'un dispositif de verrouillage (10), caractérisé par le fait que sous l'effet de l'insertion du tiroir (3) contenant l'argent dans le boîtier (2) logeant le tiroir, le couvercle (14) est relié à ce boîtier et, sous l'effet du verrouillage du couvercle (14) avec le tiroir (3) contenant l'argent, peut être retiré du boîtier (2) logeant le tiroir.

2. Tiroir-caisse suivant la revendication 1, caractérisé par le fait que le couvercle (14) est guidé de manière à être déplaçable sur le tiroir (3) contenant l'argent et peut être encliqueté sur le boîtier (2) logeant le tiroir, au moyen d'un dispositif d'encliquetage (27) pouvant être actionné sous l'effet de l'insertion du tiroir (3) contenant l'argent.

3. Tiroir-caisse suivant la revendication 2, caractérisé par le fait que le dispositif d'encliquetage (27) est un levier d'encliquetage (32), qui s'étend parallèlement à la direction de déplacement du couvercle (14), peut pivoter, dans le plan du couvercle, autour d'un axe de pivotement (31) monté sur le couvercle (14) et est précontraint par un ressort (33) dans sa position d'encliquetage.

4. Tiroir-caisse suivant la revendication 3, caractérisé par le fait que l'extrémité avant, considérée dans la direction d'insertion du couvercle (14), du levier d'encliquetage (32) possède un bec d'encliquetage (42), qui, lorsque le couvercle (14) est dans sa position au moins partiellement insérée dans le boîtier (2) logeant le tiroir, s'engage derrière un téton (43) qui est fixé au boîtier (2) logeant le tiroir, et que l'extrémité arrière (45), considérée dans la direction d'insertion, du levier d'encliquetage (32) s'étend jusqu'à proximité du bord arrière (41) du couvercle.

5. Tiroir-caisse suivant la revendication 4, caractérisé par le fait que le dispositif de verrouillage (10) est disposé et agencé de manière à agir sur l'extrémité arrière (45) du levier d'encliquetage (32).

6. Tiroir-caisse suivant l'une des revendications 1 à 5, caractérisé en ce que le dispositif de verrouillage (10) est un pêne dormant (12) équipé d'une serrure (11) et qui peut être déplacé entre une position de verrouillage, qui bloque le déplacement du couvercle (14), et une position de déverrouillage, qui libère un tel déplacement.

7. Tiroir-caisse suivant l'une des revendications 1 à 6, caractérisé par le fait que le couvercle (14) possède un organe de blocage (30), qui empêche une extraction complète du tiroir (3) contenant l'argent, lorsque le couvercle (14) est relié au boîtier (2) logeant le tiroir.

8. Tiroir-caisse suivant l'une des revendications 1 à 7, caractérisé par le fait que le bord arrière (41) du couvercle est agencé au moins en partie sous la forme d'un organe de blocage (30), qui est replié en direction du tiroir (3) contenant l'argent et dont la largeur est supérieure à la distance entre le couvercle (14) et le bord supérieur du tiroir (3) contenant l'argent.

9. Tiroir-caisse suivant l'une des revendications 1 à 8, caractérisé par le fait que le tiroir (3) contenant l'argent peut être verrouillé sur le boîtier (2) logeant le tiroir, au moyen du couvercle (14) dans sa position insérée dans le tiroir (2), et que ce verrouillage peut être supprimé au moyen du dispositif de verrouillage (10).

10. Tiroir-caisse suivant l'une des revendications 1 à 9, caractérisé par le fait que le couvercle (14) possède, à proximité de son extrémité avant (40), considérée dans la direction d'insertion, un casier de réception (50) pour au moins une carte à puce équipée de circuits intégrés, notamment d'une carte à puce selon la norme ISO 7816, cette carte pouvant être reliée, au moyen d'éléments de contact situés, d'une part, sur le couvercle (14), et, d'autre part, sur le boîtier (2), à une unité de commande de fonctionnement de la caisse enregistreuse.

11. Tiroir-caisse suivant la revendication 10, caractérisé par le fait que le casier de réception (50) possède un capot (52), qui est monté pivotant sur la face supérieure (51) du couvercle (14) et peut être fermé par le couvercle (14).
